# EUROPEAN PATENT APPLICATION

(11) **EP 2 146 006 A1**
(43) Date of publication of application: **20.01.2010**
(21) Application number: 08160738.4
(22) Date of filing: 18.07.2008
(51) Int. Cl.: E02B 17/00, F03D 1/00, B63B 5/00

(54) **Jack-up offshore platform**

(71) Applicant: Geosea NV, 2070 Zwijndrecht (BE)
(72) Inventor: VANDENBULCKE, Luc, 2000, Antwerpen (BE); DE POORTER, Bart, 9090, Melle (BE)
(74) Representative: Brouwer, Hendrik Rogier

(57) **Abstract**

The invention relates to a method for servicing a semi-permanent structure at sea. The method uses a jack-up offshore platform comprising a work deck (2) for carrying a load of at least 1000 tons, and legs (3) that support the work deck, each of the legs (3) standing substantially upright and being movable in that direction from an upper position to a lower position, where it takes support onto the sea bottom, whereby the platform (1) further comprises an assembly of at least two separate hulls (10) that support the work deck (2), extend substantially parallel to each other, and are provided with propulsion means (11), enabling to sail the platform when the legs (3) are not in the lower position. The method comprises loading the jack-up offshore platform with servicing load, such as parts and equipment, sailing to the location of the semi-permanent structure, position and anchor the platform close to the structure, and performing the servicing operation.

## Description

The invention relates to a jack-up offshore platform comprising a work deck and legs supporting the work deck, each of the legs standing substantially upright and being movable in that direction from an upper position to a lower position, in which it takes support onto the sea bottom. The invention also relates to a method for servicing a semi-permanent structure at sea using the jack-up offshore platform.

There is an increasing amount of semi-permanent structures at sea. Examples of such structures include platforms for oil and gas winning, and wind turbine parks for converting wind energy to electricity. Semi-permanent structures are designed to stay at their position for several decades. They also tend to become increasingly large and complex. A typical 'horizontal axis' wind turbine for instance comprises up to 100 meters diameter rotor blades, which rotate around a horizontal hub. The hub is connected to the nacelle, which houses a generator and other electrical components, such as sensors. The nacelle and hub, typically accounting for more than 350 tons of weight, are mounted at the top of the tower, typically from 25 to 90 meters in height. Due to their complexity and the exposure to harsh environmental conditions - the power available from the wind is a function of the cube of the wind speed - a wind turbine needs frequent servicing and repair. Since a wind turbine incurs high losses when not operating in conditions of wind, repair and maintenance should be performed as expedient as possible.

The known method for servicing a semi-permanent structure, such as a wind turbine, uses a semi-permanent jack-up offshore platform positioned in the vicinity of the wind turbine park, typically one platform per 1000 wind turbines. The platform is semi-permanent in order to be able to promptly service a wind turbine upon request, either directly or using a smaller servicing unit. For smaller repair operations, work boats or helicopters are typically used.

Although the known method has been into practice for many years, it may be improved further, in particular with respect to cost.

It is an object of the invention therefore to provide a method for servicing a semi-permanent structure at sea within short notice and at reasonable cost. It is a further object to provide a jack-up offshore platform that can be used in the method.

The method for servicing a semi-permanent structure at sea according to the invention thereto comprises
a) providing a jack-up offshore platform having a work deck for carrying a load of at least 1000 tons, and legs that support the work deck, each of the legs standing substantially upright and being movable in that direction from an upper position to a lower position, in which it takes support onto the sea bottom, wherein the platform further comprises an assembly of at least two separate hulls that support the work deck, extend substantially parallel to each other, and are provided with propulsion means, enabling to sail the platform when the legs are not in the lower position;
b) loading the jack-up offshore platform with servicing load, such as parts and equipment;
c) sailing to the location of the semi-permanent structure;
d) positioning and anchoring the platform close to the structure; and
e) performing the servicing operation.

The invention is based on the insight that a jack-up offshore platform can be modified to enable it to sail at relatively high speed, while keeping its ability to carry relatively large loads of at least 1000 tons. Such a modification has not been attempted before since for its stability, a jack-up offshore platform necessarily is squarely shaped, which makes it impossible to sail, in particular at relatively high speeds. According to the invention, it now becomes possible to provide service within hours or days, without the need to locate one or more semi-permanent offshore platforms in close vicinity of a wind turbine park. A further advantage is that service can now be provided to many semi-permanent structures at sea with one offshore platform according to the invention only. This further reduces cost. Still another advantage is that all necessary equipment can readily be taken to the semi-permanent structure to be serviced by the platform itself, thus obviating the need to transfer loads from one transporting vehicle to another.

To be able to carry out the method according to the invention, a jack-up offshore platform is provided comprising a work deck for carrying a load of at least 1000 tons, and legs that support the work deck, each of the legs standing substantially upright and being movable in that direction from an upper position to a lower position, where it takes support onto the sea bottom, whereby the platform further comprises an assembly of at least two separate hulls that support the work deck, extend substantially parallel to each other, and are provided with propulsion means, enabling to sail the platform when the legs are not in the lower position. By providing the separate hulls to support the work deck, the platform is turned into a 'catamaran' type ship, that suddenly is able to sail at relatively high speeds, but also retains its relatively high load capacity.

In a preferred embodiment, the jack-up offshore platform is **characterized in that** the hulls are hydraulically shaped and the propulsion means represent a propulsion power, such that the platform is able to sail with an average speed of at least 6 knots per hour, more preferably at least 8 knots per hour, and most preferably at least 10 knots per hour. These achievable speeds are substantially higher than the speeds that can be reached when towing an off-shore platform. With the state of the art method of towing, achievable speeds are typically lower than 4 knots per hour. How to hydraulically shape the hulls is known per se to the skilled person. Preferably the length to width ratio of the hulls is larger than 3 to 1, more preferably larger than 5 to 1, and most preferably larger than 7 to 1.

By providing the platform with propulsion means, the platform may not only sail independently to its destination at sea, but it also becomes easily maneuverable. The known platform is usually towed to its destination and then anchored at its four corners by winches. The platform is then positioned correctly by adjusting the length of the winches. This is a time-consuming operation and moreover cannot easily be performed in rough sea. The jack-up offshore platform according to the invention does not need this procedure. Instead, the propulsion means may be used to accurately position the platform in close vicinity to a structure to be serviced. The jack-up offshore platform is preferably provided with a dynamic positioning system. Such a dynamic positioning system (DPS) is known per se, but not in conjunction with an off-shore platform. A DPS calculates its position by carefully timing the signals sent by the constellation of GPS satellites high above the Earth. Each satellite continually transmits messages containing the time the message was sent, a precise orbit for the satellite sending the message, and the general system health and rough orbits of all GPS satellites. The DPS uses the arrival time of each message to measure the distance to each satellite, from which it determines its position using geometry and trigonometry. The resulting coordinates are converted to more user-friendly forms such as latitude and longitude, or location on a map, then displayed to the user. By providing the platform with a DPS, which is coupled to the propulsion means, a very accurate positioning of the platform to a structure to be served, such as a wind turbine, may be obtained.

Still a further advantage of the platform according to the invention is that it may be operated at higher water depths than the known platform. Due to its semi-permanent character, the known platform is designed for any type of weather conditions. This implies that a relatively large safety factor is applied in actual use. A jack-up offshore platform has generally the poorest stability when it is used in deep water. On such an occasion the work deck is almost at its highest position. The operational depth of the known platform therefore is usually limited to water depths of approximately 30 meters. The platform of the invention can sail to its destination in hours or days, thereby taking advantage of good weather prospects. It can therefore be used with a lower safety factor, i.e. at higher water depths. Due to the presence of propulsion means moreover, the platform can swiftly be moved away from the structure to be serviced in case of danger or deteriorating weather.

In a preferred embodiment, the jack-up offshore platform according to the invention is **characterized in that** the front end of the bow of the hulls comprises a first part substantially under water level and a second part substantially above water level, the first part being substantially spherical and extending in front of the second part, in the sailing direction. Such a bow improves the speed at which the platform may sail.

In another preferred embodiment, the jack-up offshore platform according to the invention is **characterized in that** the propulsion means represent a propulsion power of at least 3000 kW, more preferably of at least 4000 kW, and most preferably of at least 5000 kW.

In still another preferred embodiment, the jack-up offshore platform according to the invention is **characterized in that** the hulls are connected by a transverse bridge. Preferably the bridge is arc shaped at the sea facing side thereof. In particular in conjunction with the bow with a substantially spherical under water level part, this further increases the speed at which the platform can sail.

In yet another preferred embodiment, the jack-up offshore platform is provided with propulsion means at bows height of the hulls, preferably at starboard and larboard. With this measure, the platform can be accurately moved very close to a structure to be serviced, thereby improving the speed of the servicing operation. Indeed, being able to approach the structure at short distance facilitates transferring equipment, spare parts, and so on.

In a further preferred embodiment, the jack-up offshore platform comprises at least one lifting device, such as a crane.

The offshore platform according to the invention is sailed to its destination with the legs in a position other than the lower position thereof. The legs during sailing extend far above the water level and above the work deck, which is preferred for speed.

The invention will now be explained in more detail with reference to the drawings, wherein:
Fig. 1 shows an embodiment of the jack-up offshore platform according to the invention in side view;

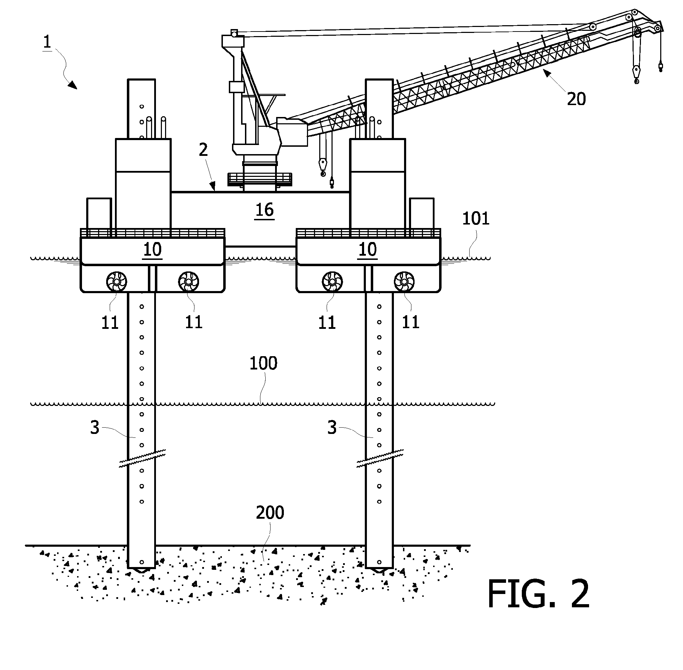

Fig. 2 shows the embodiment of the jack-up offshore platform of Fig. 1 with the crane in another position in rear view;

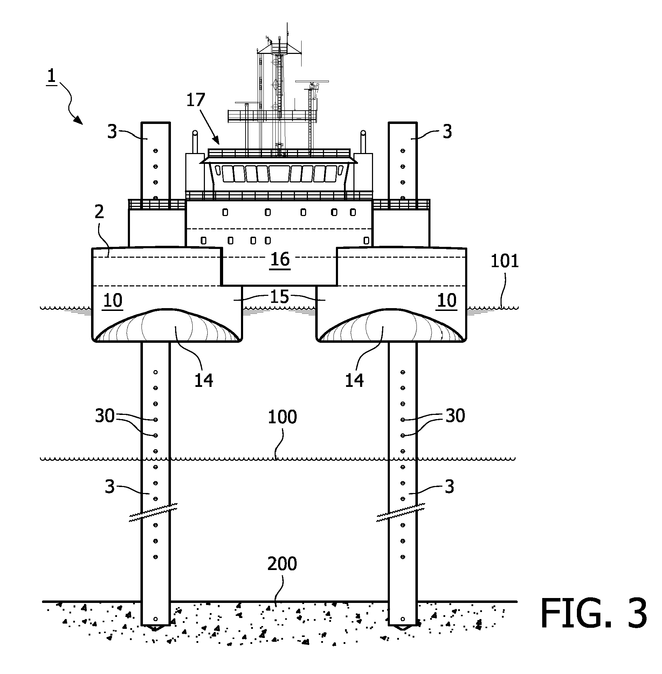

Fig. 3 shows the embodiment of the jack-up offshore platform of Fig. 1 without the crane in front view; and
Fig. 4 shows the embodiment of the jack-up offshore platform of Fig. 1 in top view.

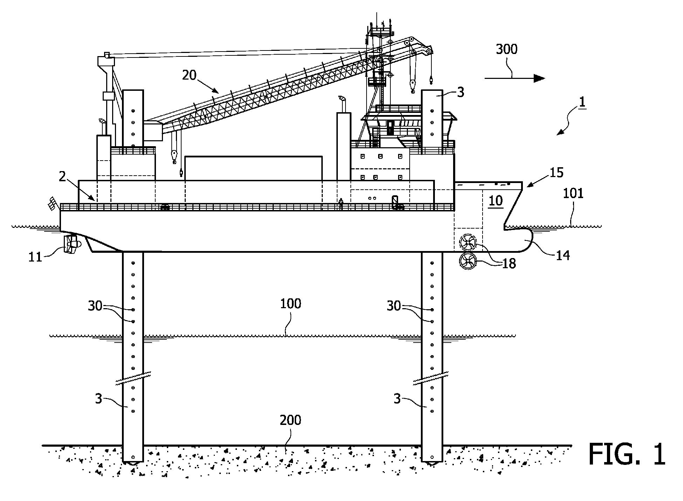

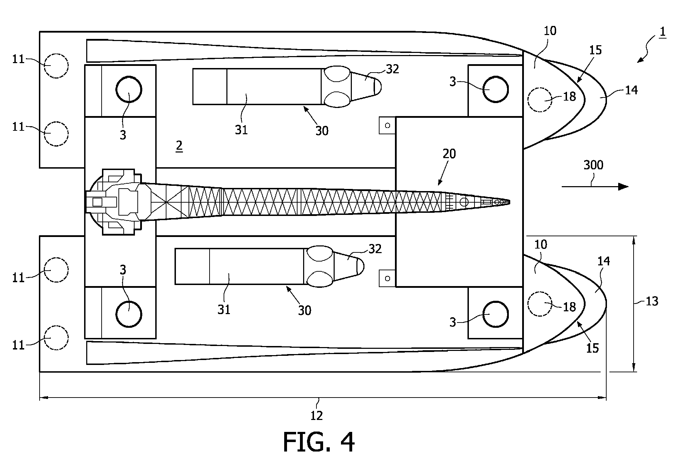

Referring to figure 1, a jack-up offshore platform 1 according to the invention and comprising a work deck 2 for carrying a load of at least 1000 tons is shown. Platform 1 is provided with legs 3 that support the work deck. Each of the legs 3 stand substantially upright and are movable in that direction from an upper position (not shown) to a lower position (shown in the figures), where it takes support onto the sea bottom 200. The height position of the work deck 2 relative to the water level 100 when the offshore platform 1 is in an anchored position at a servicing site, can be changed by fixating it relative to the legs 3 by pushing pistons (not shown) into holes 30. Platform 1 comprises an assembly of at least two separate hulls 10 that support the work deck 2, and extend substantially parallel to each other, as shown in figure 4. Hulls 10 are provided with propulsion means 11, enabling to sail platform 1 when the legs 3 are not in the lower position. Water level 101 represents the water level in sailing condition of the platform.

Hulls 10 are hydraulically shaped and in particular have a ratio of length 12 to width 13 of larger than 3 to 1, more preferably larger than 5 to 1, and most preferably larger than 7 to 1. Propulsion means 11 represent a propulsion power, such that the platform is able to sail with an average speed of at least 6 knots per hour, more preferably at least 8 knots per hour, and most preferably at least 10 knots per hour. The jack-up offshore platform 1 is preferably provided with a dynamic positioning system (not shown). The front end of the bow of the hulls 10 comprises a first part 14 substantially under the water level 101, and a second part 15, substantially above the water level 101. First part 14 is substantially spherical shaped and extends in front of second part 15, in the sailing direction 300. In combination with providing propulsion means 11 representing a propulsion power of at least 3000 kW, more preferably of at least 4000 kW, and most preferably of at least 5000 kW, the platform 1 can achieve the economically feasible speeds, as indicated above. To further stabilize off-shore platform 1, the hulls 10 are connected by a transverse bridge 16, which, for reasons of further optimizing sailing speed is arc shaped at the sea facing side thereof (not shown). The sailing platform 1 is further equipped with accommodation and a bridge 17, as commonly provided on sea-going vessels, and holding all necessary equipment to be able to navigate and sail platform 1. Platform 1 is further provided with propulsion means 18 at bows height of the hulls 10, as shown in figure 1. This allows maneuvering platform 1 very accurately and close to a structure to be serviced.

In order to be able to service a structure such as a wind turbine, the jack-up offshore platform 1 is provided with at least one lifting device in the form of crane 20, of a type typically encountered on known platforms.

According to the invented method for servicing a semi-permanent structure at sea, a jack-up offshore platform 1 as described above is loaded with servicing load, such as spare parts 30, equipment, housing, etcetera, at a loading location. As shown in figure 4, parts 30 may for instance include the nacelle 31 and hub 32 of a wind turbine to be serviced. Due to the construction of platform 1, which uses a conventional platform deck 2, the weight of such parts, which may typically exceed 350 tons, is easily accommodated. The hulls 10 allow however to sail the platform at high speed, thus combining the loading capacity of a conventional platform with the speed of sailing vessel. In a further step of the invented method, the platform is sailed to the location of the semi-permanent structure at sea in an economically feasible time frame of hours, days or weeks, if a comparably long distance must be covered. Upon arrival the platform is readily positioned and anchored close to the structure, using the DPS as well as the propulsion means (11, 18) of the platform. This positioning is faster than known in the art and therefore saves considerable time for servicing. When the platform has been anchored by lowering legs 3 until firmly embedded in the sea bottom 200, the servicing operation is started using crane 20 to take parts to be repaired form the wind turbine to board and vice versa. Upon completion of the servicing operation, the platform 1 may be loaded with return load and is sailed to another location to deliver parts to be repaired and/or to take up other spare parts.

Although the method according to the invention has been described for servicing wind turbine parks, the method and the jack-up offshore platform according to the invention may also be used for other operations, including the normal operations carried out by an offshore platform, such as oil drilling, providing housing for personnel, and the like. The advantages of the invented method and platform are appreciated when one remembers that some parts of our seas are crowded with semi-permanent offshore platforms and other floating structures. The invented platform may replace some of these semi-permanent structures at sea, which is advantageous since the sea is only occupied for a limited amount of time. The invented platform may conveniently be stationed in a harbor until needed for service.

## Claims

1. A jack-up offshore platform (1) comprising a work deck (2) for carrying a load of at least 1000 tons, and legs (3) that support the work deck, each of the legs (3) standing substantially upright and being movable in that direction from an upper position to a lower position, in which it takes support onto the sea bottom, wherein the platform (1) comprises an assembly of at least two separate hulls (10) that support the work deck (2), extend substantially parallel to each other, and are provided with propulsion means (11), enabling to sail the platform when the legs (3) are not in the lower position.

2. A jack-up offshore platform according to claim 1, **characterized in that** the hulls are hydraulically shaped and the propulsion means represent a propulsion power, such that the platform is able to sail with an average speed of at least 6 knots per hour, more preferably at least 8 knots per hour, and most preferably at least 10 knots per hour.

3. A jack-up offshore platform according to claim 1 or 2, **characterized in that** it is provided with a dynamic positioning system.

4. A jack-up offshore platform according to any one of claims 1 - 3, **characterized in that** the front end of the bow of the hulls comprises a first part (14) substantially under water level and a second part (15) substantially above water level, the first part (14) being substantially spherical and extending in front of the second part (15), in the sailing direction (300).

5. A jack-up offshore platform according to any one of the preceding claims, **characterized in that** the propulsion means (11) represent a propulsion power of at least 3000 kW, more preferably of at least 4000 kW, and most preferably of at least 5000 kW.

6. A jack-up offshore platform according to any one of the preceding claims, **characterized in that** the hulls (10) are connected by a transverse bridge (17).

7. A jack-up offshore platform according to claim 6, **characterized in that** the bridge (17) is arc shaped at the sea facing side thereof.

8. A jack-up offshore platform according to any one of the preceding claims, **characterized in that** the propulsion means comprise propulsion means (18) at bows height of the hulls.

9. A jack-up offshore platform according to any one of the preceding claims, **characterized in that** the platform comprises at least one lifting device (20).

10. Method for servicing a semi-permanent structure at sea, the method comprising loading a jack-up offshore platform according to any one of the preceding claims with servicing load, such as parts and equipment, sailing to the location of the semi-permanent structure, position and anchor the platform close to the structure, and performing the servicing operation.

11. Method according to claim 10, **characterized in that** the method comprises loading the jack-up offshore platform after the servicing operation with return load and sailing to comprises at least one lifting device.

12. Method according to claim 10 or 11, **characterized in that** the semi-permanent structure comprises a wind mill park.
